(19) Europäisches Patentamt
European Patent Office
Office européen des brevets

(11) **EP 4 712 186 A1**

(12) **EUROPEAN PATENT APPLICATION**

(43) Date of publication:
18.03.2026 Bulletin 2026/12

(21) Application number: 25200819.8

(22) Date of filing: 08.09.2025

(51) International Patent Classification (IPC):
$H01M\ 10/04^{(2006.01)}$   $H01M\ 10/0587^{(2010.01)}$
$H01M\ 50/533^{(2021.01)}$   $H01M\ 50/538^{(2021.01)}$

(52) Cooperative Patent Classification (CPC):
H01M 10/0431; H01M 10/0587; H01M 50/533;
H01M 50/538

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR

(30) Priority: 11.09.2024 KR 20240124270
27.12.2024 KR 20240199143

(71) Applicant: SK On Co., Ltd.
Seoul 03161 (KR)

(72) Inventors:
• OH, Won Je
34124 Daejeon (KR)
• SHIN, Jae Sik
34124 Daejeon (KR)
• JUNG, Moon Hyung
34124 Daejeon (KR)
• YOO, Ki Sang
34124 Daejeon (KR)

(74) Representative: Prüfer & Partner mbB
Patentanwälte · Rechtsanwälte
Sohnckestraße 12
81479 München (DE)

(54) **ELECTRODE ASSEMBLY AND BATTERY CELL AND POWER SOURCE INCLUDING THE SAME**

(57) An electrode assembly, and a battery cell and a power source including the same are provided. The electrode assembly includes a first electrode plate wound about a winding axis and including a first uncoated portion without a first electrode active material coated thereon, a second electrode plate wound about the winding axis and including a second uncoated portion without a second electrode active material coated thereon, a separator disposed between the first electrode plate and the second electrode plate, and a plurality of segments formed on at least one of the first uncoated portion or the second uncoated portion. The plurality of segments are arranged such that at least one bottom angle is changed in a winding direction.

FIG. 4

EP 4 712 186 A1

**Description**

BACKGROUND

TECHNICAL FIELD

The disclosure and implementations disclosed in this patent document generally relate to an electrode assembly, and a battery cell and a power source including the same.

TECHNICAL CONSIDERATIONS

Secondary batteries, unlike primary batteries, are convenient in that they may be charged and discharged, and are thus receiving much attention as a power source for various mobile devices and electric vehicles. Secondary batteries, unlike primary batteries, may be charged and discharged, and may be applied to devices within various fields such as digital cameras, mobile phones, laptops, hybrid cars, electric vehicles, and energy storage systems (ESS).

These secondary batteries may include battery cells in which an electrode assembly formed by stacking a cathode plate, an anode plate, and a separator or winding the same in a roll shape is accommodated inside a case. A plurality of battery cells may be stacked in a predetermined direction and accommodated in a battery module or battery pack.

Meanwhile, in a cylindrical type battery cell in which the case is in the shape of a cylinder, the electrode assembly may be accommodated in a case by stacking a cathode plate, an anode plate, and a separator and then winding the same therein.

The uncoated portion of the cathode plate and the uncoated portion of the anode plate are notched at a predetermined interval to form a plurality of flags, and the plurality of flags may be connected to a current collector in a state in which they are bent toward the center.

SUMMARY

The present disclosure can be implemented in some non-limiting embodiments to significantly reduce an area of overlap between a plurality of segments adjacent to each other in a winding direction.

According to some non-limiting aspects of the present disclosure, the welding efficiency between a plurality of segments and a current collector may be increased.

The electrode assembly of the present disclosure, the battery cell and the power source including the same may be widely applied in green technology fields such as electric vehicles, battery charging stations, and solar power generation and wind power generation using batteries. In addition, the electrode assembly of the present disclosure, the battery cell and the power source including the same may be used in eco-friendly electric vehicles, hybrid vehicles, and the like to prevent climate change by suppressing air pollution and greenhouse gas emissions.

In some non-limiting embodiments of the present disclosure, an electrode assembly includes a first electrode plate wound about a winding axis and including a first uncoated portion without a first electrode active material coated thereon; a second electrode plate wound about the winding axis and including a second uncoated portion without a second electrode active material coated thereon; a separator disposed between the first electrode plate and the second electrode plate; and a plurality of segments formed on at least one of the first uncoated portion or the second uncoated portion. The plurality of segments are arranged such that at least one bottom angle is changed in a winding direction.

In some non-limiting embodiments, the plurality of segments may overlap each other at an overlap ratio of 5% or less in the winding direction.

In some non-limiting embodiments, each of the plurality of segments may be formed to have a trapezoidal shape.

In some non-limiting embodiments, at least one of the first uncoated portion or the second uncoated portion may further include an unnotched portion in which the plurality of segments are not formed, and the unnotched portion may be disposed adjacently to at least one of a starting portion, an end close to the winding axis based on the winding direction, or an end portion, an end farthest from the winding axis.

In some non-limiting embodiments, the plurality of segments may be arranged such that a size of the at least one bottom angle thereof increases toward an end portion, an end farthest from the winding axis based on the winding direction.

In some non-limiting embodiments, the size of the at least one bottom angle of the plurality of segments may increase uniformly toward the end portion on the winding direction.

In some non-limiting embodiments, among the plurality of segments, an interior angle ($\alpha_n$) of a segment disposed nth from a starting portion, an end close to the winding axis, may satisfy the following formula: $\alpha_n = \alpha_{n-1} + \left(\frac{\alpha_e - \alpha_s}{N-1}\right)$,

where N is a total number of the plurality of segments, n is an arbitrary natural number greater than 1 and less than or equal to N, $\alpha_e$ is an interior angle of an Nth-disposed ending segment, and $\alpha_s$ is an interior angle of a 1st-disposed starting segment.

In some non-limiting embodiments, the plurality of segments may be formed as an isosceles trapezoid, and the interior angle ($\alpha_s$) of the starting segment may satisfy the following mathematical formula: $\alpha_s \leq \frac{1}{2}\left(\pi - \frac{w_s}{r_0 + \frac{\theta_s}{2\pi}t}\right)$, where $w_s$ is a width of the starting segment, $r_o$ is a shortest diameter from the winding axis to the first electrode plate or the second electrode plate, $\theta_s$ is a winding angle to the starting segment, and t is a thickness when winding once.

In some non-limiting embodiments, the winding angle ($\theta_s$) of the starting segment may satisfy the following mathematical formula: $\theta_s = \frac{-b_s + \sqrt{b_s^2 + 2r_0 l_s}}{r_0}$, where $l_s$ is a winding length from the starting portion to the starting segment, and $b_s$ is a winding thickness to the starting segment.

In some non-limiting embodiments, the plurality of segments may be formed as an isosceles trapezoid, and the interior angle ($\alpha_e$) of the ending segment may satisfy the following mathematical formula: $\alpha_e = \frac{1}{2}\left(\pi - \frac{w_e}{r_0 + \frac{\theta_e}{2\pi}t}\right)$, where $w_e$ is a width of the ending segment, $r_o$ is a shortest diameter from the winding axis to the first electrode plate or the second electrode plate, $\theta_e$ is a winding angle to the ending segment, and $t$ is a thickness when winding once.

In some non-limiting embodiments, the winding angle ($\theta_e$) of the ending segment may satisfy the following mathematical formula: $\theta_e = \frac{-b_e + \sqrt{b_e^2 + 2r_0 l_e}}{r_0}$, where $l_e$ is a winding length from a starting portion to the ending segment, and $b_e$ is a winding thickness up to the ending segment.

In some non-limiting embodiments, widths of the plurality of segments may increase at a constant rate as it goes outward in the winding direction.

In some non-limiting embodiments, a width ($w_n$) of a segment nth disposed from the winding axis among the plurality of segments may satisfy the following formula: $w_n = w_{n-1} + \left(\frac{w_e - w_s}{N-1}\right)$, where N is a number of the plurality of segments, n is a natural number greater than 1 and less than or equal to N, $w_e$ is a width of an Nth-disposed ending segment, and $w_s$ is a width of a 1st-disposed starting segment.

In some non-limiting embodiments, a central angle of the plurality of segments may decrease at a constant rate as it goes outward in the winding direction.

In some non-limiting embodiments, among the plurality of segments, a central angle ($\varnothing_n$) of an nth-disposed segment from the winding axis may satisfy the following formula: $\varnothing_n = \varnothing_{n-1} - \left(\frac{\varnothing_s - \varnothing_e}{N-1}\right)$, where N is a number of the plurality of segments, n is a natural number greater than 1 and less than or equal to N, , $\varnothing_e$ is a central angle of an Nth-disposed ending segment, and $\varnothing_s$ is a central angle of a 1st-disposed starting segment.

In some non-limiting embodiments, the bottom angle of each of the plurality of segments may include a first bottom angle disposed close to the winding axis and a second bottom angle disposed farther from the winding axis than the first bottom angle, and one of the first bottom angle or the second bottom angle may be a right-angled trapezoid formed as a right angle.

In some non-limiting embodiments, the at last one bottom angle of the plurality of segments may include a first bottom angle disposed closer to the winding axis and a second bottom angle disposed farther from the winding axis than the first bottom angle, and the plurality of segments may have a scalene trapezoid in which one of the first bottom angle or the second bottom angle may be formed as an obtuse angle and sizes of both hypotenuses are different.

In some non-limiting embodiments, at least one of the plurality of segments may have a rounded portion formed at a corner of an upper side close to the winding axis.

In some non-limiting embodiments, the plurality of segments may have a ratio of areas overlapping each other in the winding direction greater than 0, and a size of an overlapping width between adjacent segments may be constant as it goes outward from the winding axis.

In some non-limiting embodiments, the plurality of segments may be provided such that at least one hypotenuse is in contact in the winding direction.

In some non-limiting embodiments, the plurality of segments may have a ratio of areas of overlap of less than 0 provided by being adjacent to each other in the winding direction, and a size of a separation distance between the plurality of segments adjacent to each other may be constant in a direction outward from the winding axis.

In some non-limiting embodiments of the present disclosure, a battery cell includes an electrode assembly including a first electrode plate and a second electrode plate, and wound about a winding axis; a can accommodating the electrode assembly and having at least one opening formed therein; a cap assembly coupled to the can and closing the opening; and a collector plate electrically connected to the electrode assembly. At least one of the first electrode plate or the second electrode plate includes a plurality of segments bent toward the winding axis and forming one surface of the electrode assembly, and the plurality of segments are provided such that at least one bottom angle changes as they move away from the winding axis.

In some non-limiting embodiments of the present disclosure, a power source includes at least one battery cell including an electrode assembly; and a housing with the battery cell accommodated therein. The electrode assembly includes a first electrode plate wound about a winding axis and including a first uncoated portion without a first electrode active material coated thereon; a second electrode plate wound about the winding axis and including a second uncoated portion without a second electrode active material coated thereon; and a plurality of segments formed on at least one of the first uncoated portion or the second uncoated portion. The plurality of segments are arranged such that at least one bottom angle is changed in a winding direction.

Above, the non-limiting embodiments of the present disclosure has been described, but these are illustrative, and it should be understood that other configurations that are not mentioned are also included in the present disclosure.

These and other features and characteristics of the present disclosure, as well as the methods of operation and functions of the related elements of structures and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the disclosed subject matter.

## BRIEF DESCRIPTION OF THE DRAWINGS

Certain aspects, embodiments, features, and advantages of the present disclosure are illustrated by the following detailed description with reference to the accompanying drawings.

FIG. 1 is a perspective view of a battery cell according to some non-limiting embodiments according to the present disclosure;

FIG. 2 is an exploded view of a battery cell according to some non-limiting embodiments according to the present disclosure;

FIG. 3 is a schematic diagram illustrating winding of an electrode assembly according to some non-limiting embodiments according to the present disclosure;

FIG. 4 is a schematic diagram illustrating an unfolded electrode plate of an electrode assembly according to some non-limiting embodiments according to the present disclosure;

FIG. 5A is a plan view and a partial cross-sectional view of an electrode assembly according to some non-limiting embodiments according to the present disclosure;

FIG. 5B is a schematic diagram of A of FIG. 5A, illustrating a case in which the area where segments overlap each other is greater than 0;

FIG. 5C is a schematic diagram of A of FIG. 5A, illustrating a case in which the area where segments overlap each other is 0;

FIG. 5D is a schematic diagram of A of FIG. 5A, illustrating a case in which the area where segments overlap each other is less than 0;

FIG. 6 is a schematic diagram illustrating winding of an electrode assembly according to some non-limiting embodiments according to the present disclosure;

FIG. 7A is a schematic diagram illustrating how segments are arranged in the inner winding of the electrode assembly;

FIG. 7B is a schematic diagram illustrating how winding is performed in the inner winding;

FIG. 8A is a schematic diagram illustrating how segments are arranged in the outer winding of the electrode assembly;

FIG. 8B is a schematic diagram illustrating how winding is performed in the outer winding;

FIG. 9 is a schematic diagram illustrating how segments are arranged in the middle winding of the electrode assembly;

FIG. 10 is a schematic diagram comparing the inner segment, the intermediate segment, and the outer segment;

FIG. 11 is a schematic diagram comparing the inner segment, the intermediate segment, and the outer segment with respect to the winding axis;

FIG. 12A is a diagram illustrating that one side of the segment is formed at a right angle, and FIG. 12B is a diagram illustrating that the other side of the segment is formed at a right angle;

FIG. 13A is a drawing illustrating that one side of the segment is formed as an acute angle, and FIG. 13B is a drawing illustrating that the other side of the segment is formed as an obtuse angle;

FIG. 14 is a drawing illustrating that the corner of the segment is formed to be rounded; and

FIG. 15 is an example drawing of a power source according to some non-limiting embodiments according to the present disclosure;

DETAILED DESCRIPTION

No aspect, component, element, structure, act, step, function, instruction, and/or the like used herein should be construed as critical or essential unless explicitly described as such. Also, as used herein, the articles "a" and "an" are intended to include one or more items and may be used interchangeably with "one or more" and "at least one." Where only one item is intended, the term "one" or similar language is used. Also, as used herein, the terms "has," "have," "having," or the like are intended to be open-ended terms. Features of the present disclosure disclosed in this patent document are described by example embodiments with reference to the accompanying drawings.

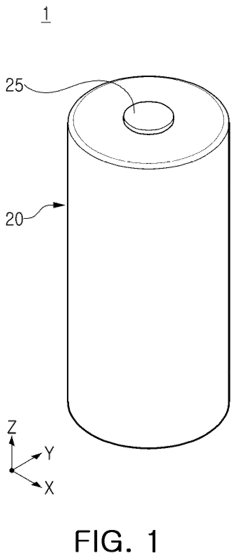

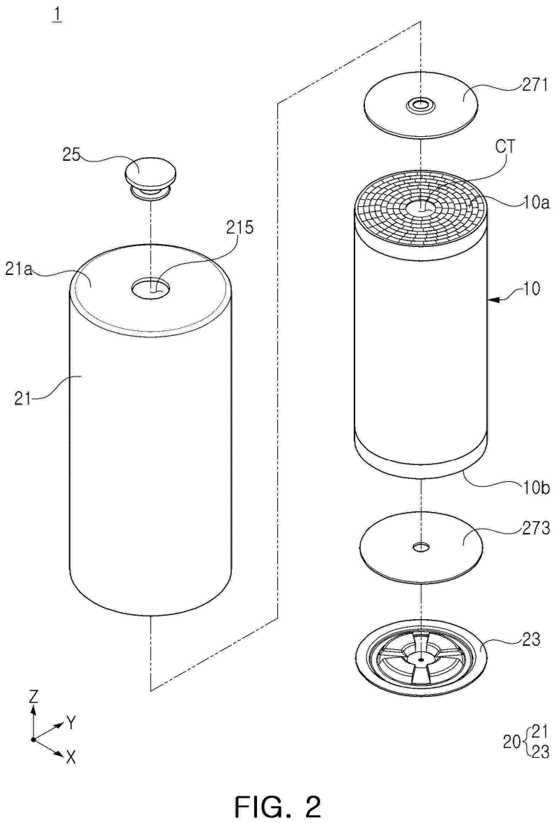

FIG. 1 is a perspective view of a battery cell according to some non-limiting embodiments, and FIG. 2 is an exploded view of a battery cell according to some non-limiting embodiments.

In the present disclosure, an electrode assembly 10, a battery cell 1, and a power source may be provided. Referring to FIG. 1 and FIG. 2, a battery cell 1 according to some non-limiting embodiments may include an electrode assembly 10, a case 20 that accommodates the electrode assembly 10, and an electrode terminal 25 exposed from the case 20.

Meanwhile, the battery cell 1 according to some non-limiting embodiments of the present disclosure may be a secondary battery. For example, the battery cell 1 may be a lithium ion battery, but is not limited thereto. For example, the battery cell 1 may be a nickel-cadmium battery, a nickel-metal hydride battery, or a nickel-hydrogen battery that may be charged and discharged.

The case 20 may be one of a pouch type, a prismatic type, or a cylindrical type. For example, as illustrated in the drawing, the battery cell 1 according to some non-limiting embodiments may be a cylindrical type cell in which the case 20 that accommodates the electrode assembly 10 is a cylindrical type, but is not necessarily limited thereto. According to some non-limiting embodiments, the electrode assembly 10 may be wound based on a winding axis and accommodated in the case 20.

The case 20 may accommodate the electrode assembly 10 therein. The case 20 may include a metal material such as aluminum or stainless steel for electrical strength. However, the present disclosure is not limited to the material of the case 20. The case 20 may include a can 21 having an opening formed in at least one side and a cap assembly 23 that closes the opening of the can.

According to some non-limiting embodiments, the can 21 may have a terminal hole 215 formed in one side through which an electrode terminal 25 is disposed, and an opening (not illustrated) formed in the other side, through which a cap assembly 23 is disposed. The terminal hole 215 may be formed in an upper surface 21a of the can. Meanwhile, the upper surface herein does not necessarily mean the top, but should be interpreted as meaning including one surface of the can 21 in which an opening is not formed. According to some non-limiting embodiments, the first electrode of the electrode assembly 10 may be electrically connected to the electrode terminal 25, and the second electrode may be electrically connected to at least one of the can 21 and the cap assembly 23. In this case, the first electrode may be either a cathode or an anode, and the second electrode may be an electrode having a polarity opposite to that of the first electrode.

According to some non-limiting embodiments, the cap assembly 23 may be disposed in the opening of the can 21 to face the electrode terminal 25 with the electrode assembly 10 interposed therebetween.

In addition, the battery cell 1 according to some non-limiting embodiments may further include collector plates 271 and 273 to be electrically connected to the electrode assembly 10. The collector plates 271 and 273 may include an electrically conductive material such as metal. The collector plates 271 and 273 may be electrically connected to the electrode assembly 10. According to some non-limiting embodiments, the collector plates 271 and 273 may include a first collector plate 271 facing one surface 10a of the electrode assembly 10, and a second collector plate 273 facing the other surface 10b of the electrode assembly 10.

According to some non-limiting embodiments, the first collector plate 271 may be electrically connected by contacting one surface 10a of the electrode assembly 10. For example, the first collector plate 271 may be welded by a laser or the like while in contact with the one surface 10a. Similarly, the second collector plate 273 may be electrically connected by contacting the other surface 10b of the electrode assembly 10. For example, the second collector plate 273 may be welded by a laser or the like while in contact with the other surface 10b of the electrode assembly 10.

The electrode terminal 25 may be disposed in the terminal hole 215 of the can 21. The electrode terminal 25 may include an electrically conductive material and may be electrically connected to an external power source. According to some non-limiting embodiments, the electrode terminal 25 may be electrically connected to the first collector plate 271.

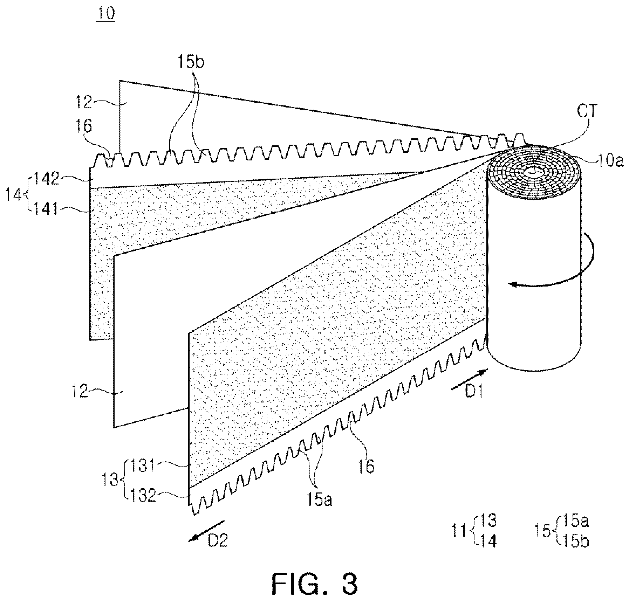

FIG. 3 is a schematic diagram illustrating the winding of an electrode assembly according to some non-limiting embodiments.

Referring to FIG. 3, the electrode assembly 10 according to some non-limiting embodiments may include a plurality of electrode plates 11 and a separator 12 disposed therebetween. According to some non-limiting embodiments, the plurality of electrode plates 11 may be provided as a jelly-roll that is wound based on a winding axis. According to some non-limiting embodiments, the electrode assembly 10 may be accommodated in a can 21 by winding in a state in which the first electrode plate 13, the separator 12, the second electrode plate 14, and the separator 12 described below are alternately stacked.

The electrode plate 11 may include a first electrode plate 13 having a first polarity and a second electrode plate 14 having a second polarity. According to some non-limiting embodiments, one of the first electrode plate 13 or the second electrode plate 14 may have a cathode polarity and the other may have an anode polarity.

According to some non-limiting embodiments, the first electrode plate 13 and the second electrode plate 14 may be stacked with wide surfaces thereof facing each other, and a separator 12 may be disposed therebetween. The separator 12 may be disposed between the first electrode plate 13 and the second electrode plate 14 to prevent an electrical short circuit and to allow ion flow. As an example, the separator 12 may include a porous polymer film or a porous nonwoven fabric.

The first electrode plate 13 may have a first electrode current collector and a first electrode active material may be applied to the first electrode current collector. According to some non-limiting embodiments, the first electrode plate 13 may include a first coated portion 131 which is a portion coated with a first electrode active material, and a first uncoated portion 132 which is a portion in which the first electrode active material is not applied. The first uncoated portion 132 may be a portion in which the first electrode active material is not applied and a portion in which the first electrode current collector is exposed. The first uncoated portion 132 may function as a passage electrically connected to an adjacent member.

The second electrode plate 14 may have a second electrode active material applied to the first electrode current collector and the second electrode current collector. According to some non-limiting embodiments, the second electrode plate 14 may include a second coated portion 141 which is a portion coated with a second electrode active material, and a second uncoated portion 142 which is a portion in which the second electrode active material is not applied. The second uncoated portion 142 is a portion in which the second electrode active material is not applied, and may be a portion in which the second electrode current collector is exposed. The second uncoated portion 142 may function as a passage electrically connected to an adjacent member.

The electrode assembly 10 according to some non-limiting embodiments may include a plurality of segments 15 formed by notching the uncoated portions 132 and 142 into a predetermined shape. The segments 15 may include a plurality of first segments 15a formed by notching the first uncoated portion 132 into a predetermined shape, and a plurality of second segments 15b formed by notching the second uncoated portion 142 into a predetermined shape. According to some non-limiting embodiments, a plurality of first segments 15a may be bent toward the winding axis to form the other surface 10b of the electrode assembly 10, and a plurality of second segments 15b may be bent toward the winding axis to form one surface 10a of the electrode assembly 10. According to some non-limiting embodiments, a plurality of first segments 15a may be electrically connected to a second collector plate 273, and a plurality of second segments 15b may be electrically connected to a first collector plate 271.

Hereinafter, when referred to as a segment 15, it may be interpreted as a first segment 15a formed on a first electrode plate 13 and/or a second segment 15b formed on a second electrode plate 14.

Meanwhile, although the description is based on the fact that segments 15 are formed on both the first electrode plate 13 and the second electrode plate 14, the present disclosure is not limited thereto, and it may be formed on either one.

Hereinafter, the segments will be described in more detail with reference to the drawings.

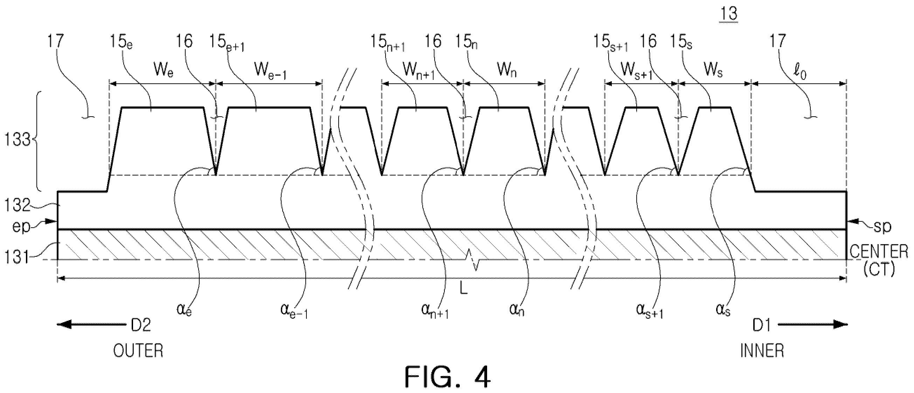

FIG. 4 is a schematic diagram illustrating an unfolded electrode plate of an electrode assembly according to some non-limiting embodiments. FIG. 4 shows a first electrode plate 13 unfolded. FIG. 4 is described based on the first electrode plate 13, but this is for convenience, and the second electrode plate 14 should be interpreted in the same manner.

Referring to FIG. 4, an end portion in the inner direction D1 of the first electrode plate 13 may be referred to as a starting portion (SP), and an end portion in the outer direction D2 may be referred to as an end portion (EP). Although the drawing is described based on the first electrode plate 13, the starting portion (SP) and the end portion (EP) are terms used to describe relative positions with respect to a winding axis, and are not limited to the first electrode plate 13, and may be used for any structure of the electrode assembly 10.

The first electrode plate 13 may include a plurality of segments 15. According to some non-limiting embodiments, the segment 15 may be formed in a trapezoidal shape by notching the uncoated portion 132 by the notched portion 16. According to some non-limiting embodiments, the plurality of segments 15 may be provided so that the shapes thereof may be uniformly changed from the starting portion (SP) to the end portion (EP).

The plurality of segments 15 may include a starting segment $(15_s)$ disposed closest to the starting portion (SP), an ending segment $(15_e)$ disposed closest to the end portion (EP), and a plurality of intermediate segments $(15_n)$ disposed between the starting segment $(15_s)$ and the ending segment $(15_e)$.

The subscripts of the drawing symbols are intended to express the order of disposing from the starting portion (SP) in the plurality of segments 15. For example, in the plurality of segments ($15_{1,2,3...}$), the starting segment ($15_s$) may be expressed as $15_1$, the ending segment ($15_e$) may be expressed as $15_n$, and the segments disposed therebetween may be expressed as ($15_n$). In this case, N is the total number of segments 15, and n is a natural number greater than 1 and less than N and may refer to the segment 15 disposed in the middle.

For example, if the number of segments 15 is 10 (N=10), the starting segment ($15_s$) may be expressed as $15_1$, the intermediate segment ($15_n$) may be expressed as $15_{2,3....9}$, and the ending segment ($15_e$) may be expressed as $15_{10}$.

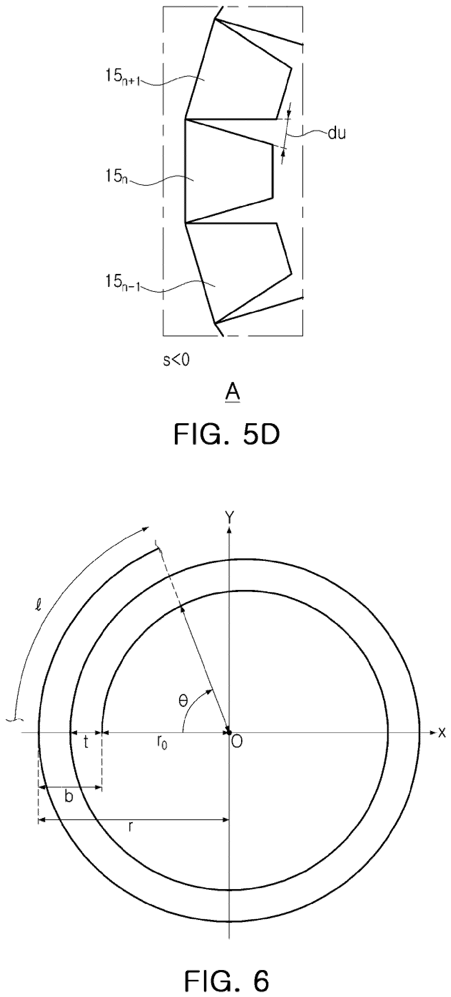

According to some non-limiting embodiments, the interior angles may be configured to be changeable from the inner segment (15s) to the outer segment (15s). For example, according to some non-limiting embodiments, the electrode assembly includes a first electrode plate 13 wound around a winding axis (O, see from FIG. 6) and including a first uncoated portion 132 on which a first electrode active material is not applied, a second electrode plate 14 wound around the winding axis (O) and including a second uncoated portion 142 on which a second electrode active material is not applied, a separator 12 disposed between the first electrode plate 13 and the second electrode plate 14, and a plurality of segments 15 formed on at least one of the first uncoated portion 132 or the second uncoated portion 142, and the plurality of segments 15 may be arranged such that at least one bottom angle changes in the winding direction (WD).

According to some non-limiting embodiments, the bottom angles of the segments 15 may be provided to increase from the starting portion (SP) to the end portion (EP). In addition, according to some non-limiting embodiments, the widths (W) of the segments 15 may be provided to increase from the starting portion (SP) to the end portion (EP).

In addition, according to some non-limiting embodiments, the first electrode plate 13 may include an unnotched portion 17 in which the segment 15 is not formed. The unnotched portion 17 may be formed adjacent to at least one of the starting portion (SP) or the end portion (EP). For example, according to some non-limiting embodiments, at least one of the first uncoated portion 132 or the second uncoated portion 142 includes an unnotched portion 17 in which a plurality of segments 15 are not formed, and the unnotched portion 17 may be disposed adjacently to at least one of the starting portion (SP), which is an end close to the winding axis (O) based on the winding direction (WD, or circumferential direction), or the end portion (EP), which is an end farthest from the winding axis.

Although the unnotched portion 17 is illustrated in the drawing as being formed in both the starting portion (SP) and the end portion (EP), the present disclosure is not limited thereto. The unnotched portion 16 may refer to a portion in which the uncoated portions 132 and 142 are not notched, for example, the segment 15 is not disposed. In addition, in the present disclosure, the area in which the segment 15 is formed may be referred to as notched areas 133 and 143. For example, the first notched area 133 may refer to an area in which the segment 15 is formed in the uncoated portion 132 of the first electrode plate 13, and the second notched area 143 may refer to an area in which the segment 15 is formed in the uncoated portion 142 of the second electrode plate 14.

Meanwhile, the interior angle in the present disclosure may refer to the interior angle of the vertex where two sides of a segment 15 formed as a polygon meet. In addition, the bottom angle according to some non-limiting embodiments described above refers to the angle of the bottom side of the segment 15, and may refer to the angle of the vertex of the bottom side of the segment 15. For example, when the segment 15 is formed in a trapezoid as illustrated in FIG. 4, the side facing the coated portion 131, 141 may be called the bottom side of the segment 15, and the side facing therewith (or facing the winding axis) may be called the upper side. In the present disclosure, the bottom angle of the segment 15 is expressed as '$\alpha$' for the convenience of understanding. However, the present disclosure is not limited to changing the angle of the bottom angle ($\alpha$), and the upper angle (interior angle of the upper side) may also be changed. For example, the term "interior angle" in the present disclosure may mean including at least one of the upper angle or the bottom angle of the segment 15. The present disclosure will focus on a structure in which the bottom angle ($\alpha$) of the segment 15 is changed.

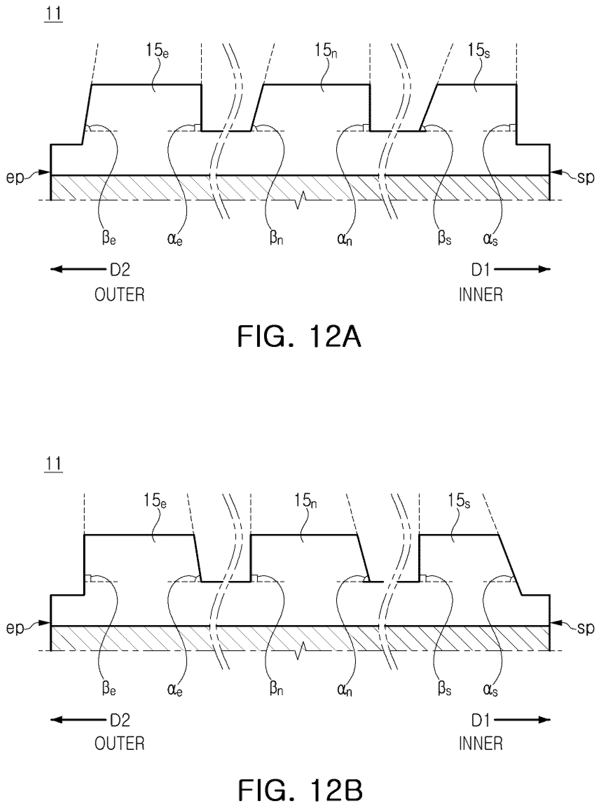

In addition, as described below from FIG. 12A, the interior angle of the segment 15 may include the first bottom angle ($\alpha$), which is the bottom angle of the vertex on the starting portion (sp) side, and the second bottom angle ($\beta$), which is the bottom angle on the end portion (ep) side. In FIG. 4, for the convenience of understanding, the first bottom angle ($\alpha$) is referred to as the bottom angle by using the segment 15 as an Isosceles trapezoid as an example, but as described above, the bottom angle of the present disclosure is not limited thereto.

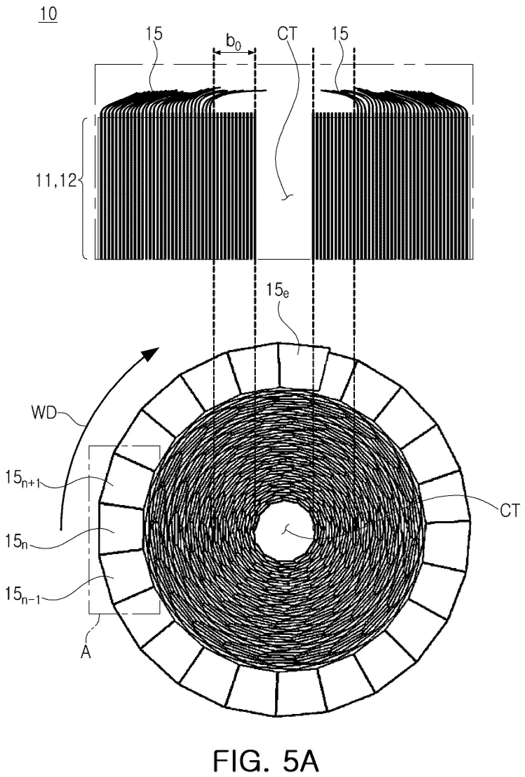

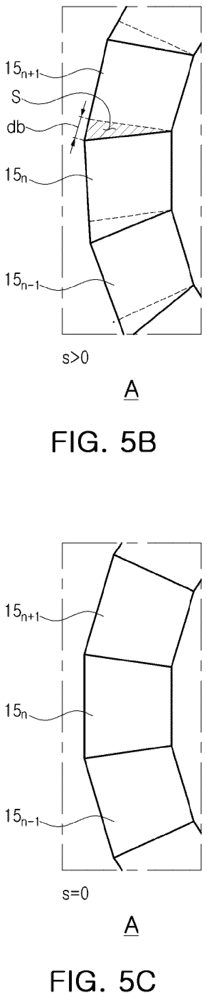

FIG. 5A is a plan view and a partial cross-sectional view of an electrode assembly according to some non-limiting embodiments. FIG. 5B is a schematic diagram of A in FIG. 5A, illustrating a case in which the area where segments overlap each other is greater than 0, FIG. 5C is a schematic diagram of A in FIG. 5A, illustrating a case in which the area where segments overlap each other is 0, and FIG. 5D is a schematic diagram of A in FIG. 5A, illustrating a case in which the area where segments overlap each other is less than 0.

Referring to FIG. 5, the electrode assembly 10 may be wound around the winding direction (WD) and an empty center (CT) may be formed therein. According to some non-limiting embodiments, a plurality of the segments 15 may be folded toward the center (CT) and overlapped one after another to form connecting surfaces 10a and 10b of the electrode assembly 10. The plurality of folded segments 15, for example, the connecting surfaces 10a and 10b, may be electrically connected to each other by welding collector plates 271 and 273.

Meanwhile, the connecting surfaces 10a and 10b may have a different flatness depending on the area of the region where the plurality of segments 15 overlap each other along the winding direction (WD). According to some non-limiting embodiments, the area of overlap between the plurality of segments 15 along the winding direction (WD) may be eliminated or significantly reduced. For example, among the plurality of segments 15, the nth segment ($15_n$) may have no or minimized area of overlap with the adjacent segments ($15_{n+1}$, $15_{n-1}$) along the winding direction (WD).

In this case, the absence or minimization of the area of overlap may indicate that the ratio of the area of overlap (s, see FIGS. 5B, 5C and 5D) along the winding direction is 5% or less. A detailed description thereof will be given later.

In addition, according to some non-limiting embodiments, an unnotched portion 17 may be formed at a location close to the center (CT). Referring back to FIG. 4, since the unnotched portion 17 close to the starting portion (SP) in the electrode plate 11 is formed by a predetermined distance ($l_0$), the segment 15 may not be formed therein by the diameter thickness ($b_0$) corresponding thereto. Therefore, the electrode assembly 10 may be prevented from being rolled inward toward the center (CT) as illustrated in the drawing. However, the present disclosure is not limited to the presence or absence of the unnotched portion 17, or the distance and diameter.

According to some non-limiting embodiments of the present disclosure, a plurality of segments may be prevented or minimized from overlapping each other in the winding direction (WD). For example, a plurality of segments 15 adjacent to each other in the winding direction may not overlap each other, or the area of overlap may be significantly reduced. Therefore, the flatness of the connecting surfaces 10a and 10b of the electrode assembly 10 may be improved, and the welding efficiency with the collector plates 271 and 273 may be increased. Meanwhile, in this case, the "winding direction (WD)" means the direction in which the electrode assembly 10 is wound around the winding center axis, and may be expressed as "circumferential direction". In addition, in this case, "overlapping each other in the winding direction" may indicate that one segment 15 among a plurality of segments 15 overlaps other segments 15 disposed adjacently to each other in the winding direction (WD) or the circumferential direction. For example, according to some non-limiting embodiments, the intermediate segment ($15_n$), which is the nth disposed segment 15, may be prevented or minimized from overlapping with its adjacent segments ($15_{n+1}$, $15_{n-1}$) along the winding direction (WD).

Referring to FIGS. 5B, 5C and 5D, the ratio of the area of overlap (s) between segments 15 as described above may be zero or significantly reduced. According to some non-limiting embodiments, the area of overlap (s) between a plurality of segments 15 adjacent to each other in the winding direction (WD) may be 5% or less. If the area of overlap (s) exceeds 5%, the welding efficiency with the collector plates 271 and 273 may decrease due to the step between the plurality of segments 15 due to the area of overlap (s). In terms of welding efficiency and manufacturing performance alone, it is desirable that the area of overlap (s) between segments 15 be 0 or less, but in an actual manufacturing process, considering assembly tolerances, or the like, the area of overlap may be formed to be larger than 0.

The present disclosure designs the arrangement of the size, width, and the like of the segments 15 through the mathematical formula described below, so that the area of overlap between adjacent segments 15 is only 5% or less, thereby eliminating ($S \leq 0$) or minimizing ($0 < S \leq 5\%$) the area of overlap, and thus enabling smooth contact with the collector plates 271 and 273. For example, according to some non-limiting embodiments, the step between the area of overlap and the area of non-overlap of the segments 15 in the winding direction (WD) is reduced, so that the weld may be uniformly formed.

In this case, the "ratio of area of overlap (s)" may refer to the ratio of the area (s) of one segment 15 that overlaps with another adjacent segment 15. In addition, "the ratio of the area of overlap (s) is 5% or less" may include the area of overlap (S) being 5% or less (see FIG. 5B), the area of overlap (S) being 0 when the hypotenuses of the trapezoids are disposed to touch each other (see FIG. 5C), and the area of overlap (S) being less than 0 because they are formed so as not to overlap each other (see FIG. 5D). In this case, "the area of overlap (s) being less than 0" may indicate that adjacent segments 15 are spaced apart from each other.

In more detail, referring to FIG. 5B, the ratio of the area of overlap (S) of the plurality of segments 15 of the electrode assembly 10 according to some non-limiting embodiments along the winding direction (WD) may be greater than 0 (S>0). In this case, according to some non-limiting embodiments, the size of the overlapped width (db) between the adjacent segments 15 in the winding direction may be constant as it goes outward from the winding axis (O). The overlapped width (db) refers to the overlapped distance between the adjacent segments 15, and may refer to, for example, the size of the bottom side of portions thereof overlapping each other. In addition, according to some non-limiting embodiments, in this case (S>0), the size of the area of overlap (S) may also be constant as it goes outward from the winding axis (O). In this case, the overlapped width (db) refers to the distance of the hypotenuses between the adjacent two segments 15.

In addition, referring to FIG. 5C, the plurality of segments 15 may be provided such that at least one hypotenuse is in contact along the winding direction (WD). For example, the hypotenuse of one segment 15 among the plurality of segments 15 may be provided such that it is in contact with the hypotenuse of another adjacent segment 15 along the winding direction (WD). In this manner, when a plurality of segments 15 are wound, one surface 10a of the electrode assembly 10 may be formed flat.

In addition, referring to FIG. 5D, the ratio of the area (S) in which the plurality of segments 15 of the electrode assembly 10 according to some non-limiting embodiments overlap each other along the winding direction (WD) may be less than 0 (S<0). For example, the adjacent segments 15 may be spaced apart from each other. In this case, according to some non-limiting embodiments, the size of the spaced width (du) between the adjacent segments 15 in the winding direction (WD) may be constant as it goes outward from the winding axis (O). The spaced width (du) refers to the distance between the adjacent segments 15, and may mean, for example, the size between the upper sides that are spaced apart from each other. In addition, according to some non-limiting embodiments, in this case (S<0), the size of the area (S) that does not overlap each other may also be constant as it goes outward from the winding axis (O). For example, the area of the gap between adjacent segments 15 may be constant.

According to some non-limiting embodiments, when the mathematical formula described below is satisfied, a plurality of segments 15 may be prevented from overlapping each other in the winding direction, or the area of overlap may be significantly reduced. Hereinafter, a detailed description will be given with reference to the drawings.

FIG. 6 is a schematic diagram illustrating the winding of the electrode assembly according to some non-limiting embodiments.

Referring to FIG. 6, the electrode assembly 10 may be wound around the winding axis (O). Referring to the drawing, the radius (r) from the winding axis (O) to an arbitrary winding point may be obtained by the mathematical formula below.

[Mathematical Formula 1]

$$r = r_0 + b = r_0 + nt$$

In this case, $r_0$ is the shortest distance (radius of the winding core) between the winding axis (O) and the electrode assembly 10, and b is the winding thickness of the electrode assembly 10, which is the radius from the shortest distance to the corresponding winding point. In addition, $b = nt$ may be used as in the mathematical formula above. In this case, n is the number of windings to the corresponding winding point, and t may refer to the thickness of the electrode assembly per winding. For example, t may be obtained by the thickness of each configuration of the electrode assembly 10. For example, t may be the thickness of the first electrode(13) + the thickness of the second electrode (14) + the thickness of $2\times$the separator (12). For example, t means the "thickness of the electrode assembly 10 itself" and may be a value determined by the respective numbers and thicknesses of the first electrode 13, the second electrode 14, the separator 12, and the like.

In addition, the winding length (1) from the starting portion (SP) of the electrode assembly 10 to the arbitrary point may be obtained as the arc length (1) between the starting portion (SP) and the arbitrary point by integrating the winding angle (θ) as in the mathematical formula below.

[Mathematical Formula 2]

$$l = \int_0^\theta r \, d\theta$$

In this case, θ may refer to the winding angle [rad] from the starting portion (SP) to the arbitrary point.

Hereinafter, the structure of the segment 15 is described for example using the mathematical formulas 1 and 2.

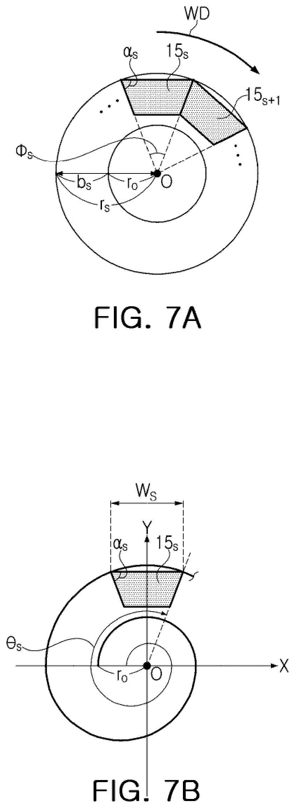

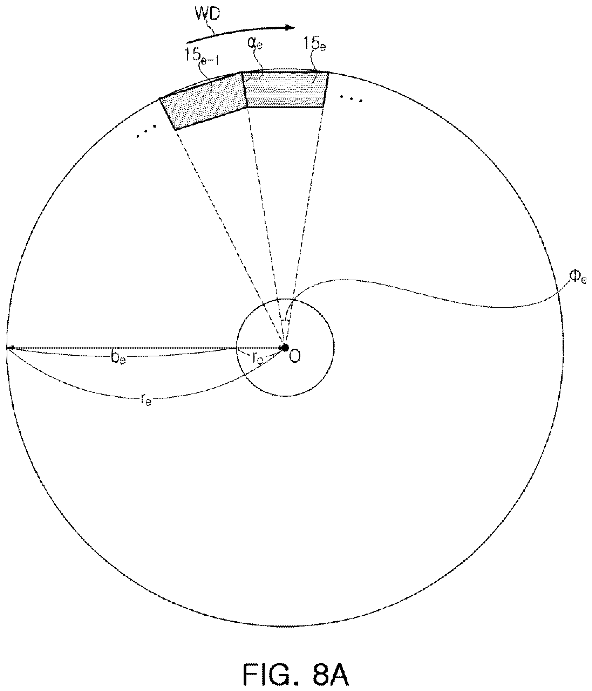

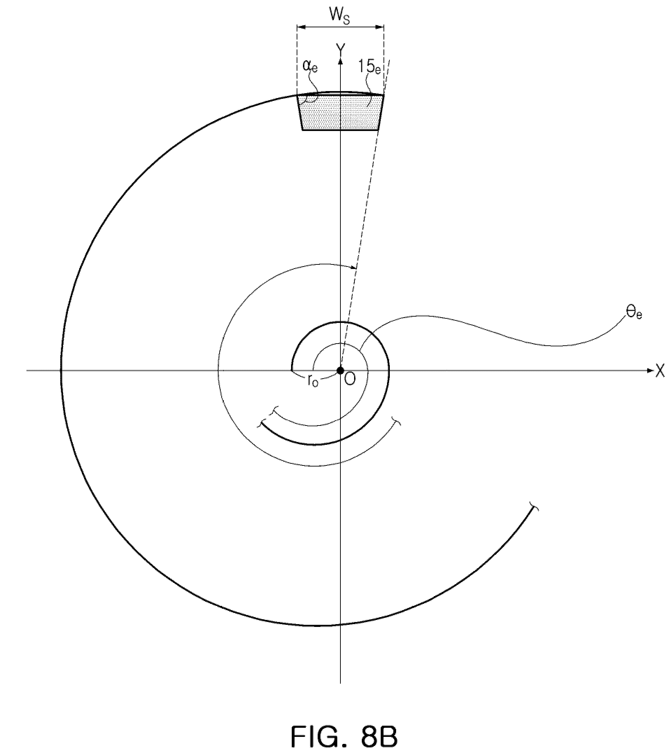

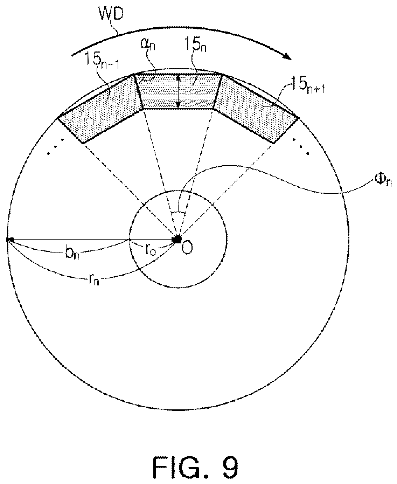

FIG. 7A is a schematic diagram illustrating that segments are arranged in the inner winding of the electrode assembly, FIG. 7B is a schematic diagram illustrating how the winding is performed in the inner winding, FIG. 8A is a schematic diagram illustrating that segments are arranged in the outer winding of the electrode assembly, FIG. 8b is a schematic diagram illustrating how the winding is performed in the outer winding, and FIG. 9 is a schematic diagram illustrating that segments are arranged in the middle winding of the electrode assembly.

For example, FIGS. 7A and 7B schematically illustrate a segment 15 of the inner winding, FIGS. 8A and 8B schematically illustrate a segment 15 of the outer winding, and FIG. 9 schematically illustrates a segment 15 of the middle winding therebetween.

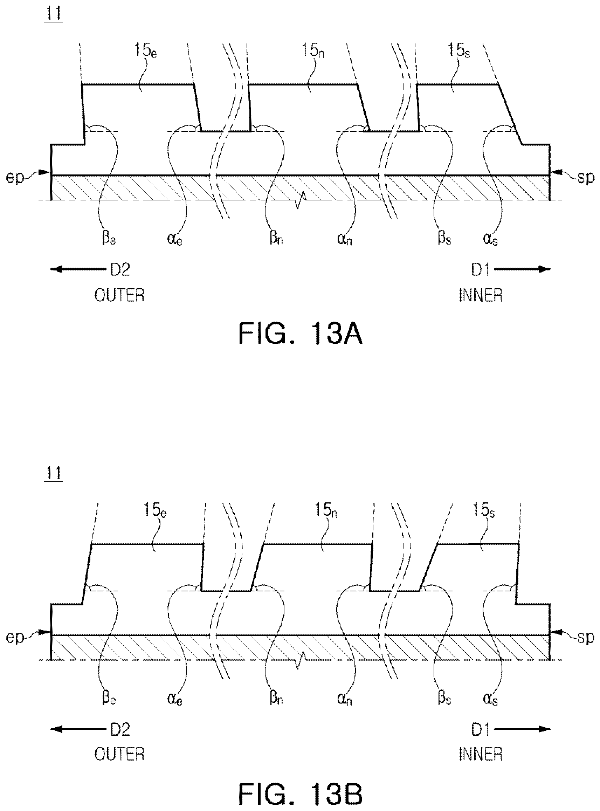

According to some non-limiting embodiments, a plurality of segments 15 may be formed in a trapezoid. The "trapezoid" referred to in the present disclosure may refer to a quadrilateral including upper and lower sides of a segment 15 that are parallel to each other. In this case, the "trapezoid" may refer to including at least one of an "isosceles trapezoid" in which the lengths of two hypotenuses other than the parallel upper and lower sides are equal, a "scalene trapezoid" in which the lengths or angles of the two hypotenuses are different from each other, or a "right-angled trapezoid" in which one of the bottom angles is a right angle. For the convenience of understanding, the present disclosure illustrates an example in which the segment 15 is an isosceles trapezoid in FIGS. 4, 5A, 5B, 5C, 5D, 6, 7A, 7B, 8A, 8B, and 9 to 11, but the present disclosure is not limited thereto, and may provide an example of being equipped with a right-angled trapezoid as in FIGS. 12A and 12B, or a scalene trapezoid as in FIGS. 13A and 13B.

Also, according to some non-limiting embodiments, the heights of the plurality of segments 15 may be the same. However, this is only one example, and the present disclosure is not necessarily limited thereto.

Also, referring to FIG. 4 together, the plurality of segments 15 may be disposed in N numbers between the starting portion (sp), which is an end on the winding axis (O) or center (CT) side, and the end portion (ep), which is a far end therefrom, with respect to the winding direction (WD).

Referring to FIG. 7A and FIG. 7B, the segment 15 disposed closest to the starting portion (SP) among the plurality of segments 15 is illustrated to obtain the bottom angle of the starting segment ($15_s$). The starting segment ($15_s$) is the first segment 15 formed based on the starting portion (SP) among the plurality of segments 15, and may be expressed as $15_1$. Hereinafter, elements related to the starting segment ($15_s$) are expressed with the subscript "s".

Referring to FIG. 7A, FIG. 7B and mathematical formula 2, the wound distance ($l_s$) from the starting portion (SP) to the starting segment ($15_s$) may be obtained by the following formula.

[Mathematical Formula 3]

$$l_s = \int_0^{\theta_s} r_s \, d\theta = \int_0^{\theta_s} (r_0 + b_s) d\theta = \frac{r_0}{2}\theta_s^2 + b_s\theta_s$$

In this case, $\theta_s$ is the winding angle [rad] from the starting portion (SP) to the starting segment ($15_s$), $r_s$ is the radius from the central axis to the starting segment ($15_s$), and $b_s$ means the thickness from the shortest distance ($r_0$) to the starting segment ($15_s$), which may be obtained as $n_s \cdot t$. In this case, $n_s$ is the number of turns up to the starting segment ($15_s$), and t may be the thickness of the electrode assembly 10 described above. Meanwhile, if the unnotched portion 17 is formed in the starting portion (SP), $l_s$ may be a value including the length ($l_{sp}$) of the unnotched portion 17 formed in the above-described starting portion (SP). Meanwhile, the winding angle ($\theta_s$) is a polar coordinate value representing the length of winding from the starting portion (SP) to one side of the starting segment ($15_s$), and may be expressed in radians. In some non-limiting embodiments, if the unnotched portion 17 is formed in the starting portion (SP), the winding angle ($\theta_s$) may be $2\pi$ or more. Meanwhile, mathematical formula 3 may be represented as the formula for the winding angle ($\theta_s$) as follows.

[Mathematical Formula 4]

$$\theta_s^2 + b_s\theta_s - l_s = 0 \quad (단, \ d_s > 0)$$

In this case, $\theta_s^2 > 0$ and the mathematical formula above is in the form of a quadratic equation, and the solution to $\theta_s$ may be obtained using the root formula as in the mathematical formula below.

[Mathematical Formula 5]

$$\theta_s = \frac{-b_s + \sqrt{b_s^2 + 2r_0 l_s}}{r_0}$$

Meanwhile, referring to FIG. 7A and FIG. 7B, when the shape of segment 15 is assumed to be an isosceles trapezoid, the sum ($2\alpha_s$) of the bottom angles of the bottom side of the inner segment (15e) may be ($\pi-\varnothing_s$). For example, the bottom angle ($\alpha_s$) of any one of the bottom sides of the inner segment (15e) may be $\frac{\pi - \varnothing_s}{2}$. In this case, $\varnothing_s$ may be the central angle or circumferential angle of the inner segment 15 based on the central axis (O).

$\varnothing_s$ may be obtained as $\varnothing_s = \frac{2\pi w_s}{c_s}$ through the formula of the ratio ($c_s:w_s=2\pi:\varnothing_s$) of the inner segment 15 to the entire circle. In this case, $c_s$ is the circumference of the circle of the portion where the inner segment (15s) is formed, and $w_s$ may be the width of the bottom side of the inner segment (15s). Meanwhile, $c_s$ may be obtained as $2\pi r_s$. However, $r_s$ is the diameter from the central axis to the inner segment (15s).

By combining the above formulas, one bottom angle($\alpha_s$) may be obtained as follows.

[Mathematical Formula 6]

$$\alpha_s = \frac{1}{2}(\pi - \varnothing_s) = \frac{1}{2}\left(\pi - \frac{2\pi w_s}{c_s}\right) = \frac{1}{2}\left(\pi - \frac{2\pi w_s}{2\pi r_s}\right) = \frac{1}{2}\left(\pi - \frac{w_s}{r_s}\right) = \frac{1}{2}\left(\pi - \frac{w_s}{r_0 + b_s}\right) =$$

$$\frac{1}{2}\left(\pi - \frac{w_s}{r_0 + n_s t}\right) = \frac{1}{2}\left(\pi - \frac{w_s}{r_0 + \frac{\theta_s}{2\pi}t}\right)$$

Meanwhile, in some non-limiting embodiments, the segments 15 may be spaced apart from each other, for example, so that an inequality relationship with a smaller angle may be obtained. For example, $\alpha_s \leq \frac{1}{2}\left(\pi - \frac{w_e}{r_o + \frac{\theta_s}{2\pi}t}\right)$ may be satisfied. In this case, by substituting mathematical formula 5 into mathematical formula 6, one bottom angle($\alpha_s$) may be derived as illustrated below.

[Mathematical Formula 7]

$$\alpha_s = \frac{1}{2}\left(\pi - \frac{w_s}{r_o + \frac{(-b_s + \sqrt{b_s^2 + 2r_o l_s})t}{2\pi r_o}}\right)$$

In this case, $r_s$ refers to the radius from the central axis (O) to the inner segment (15s), $r_o$ is the radius of the winding core, and $n_s$ may refer to the number of windings up to the inner segment (15s). For example, if there is no unnotched portion 17 in the starting portion (SP), $n_s = 1$, and thus it may be $r_s = r_o + t$.

The winding angles ($\theta_n, \theta_e$) and bottom angles ($\alpha_n \alpha_e$) of the intermediate segment ($15_n$) and the ending segment ($15_e$) may also be obtained using mathematical formulas 1 to 6. For example, although the above-described description and mathematical formulas were described based on the starting segment ($15_s$) for the convenience of understanding, the present disclosure is not limited thereto, and the above-described description may be applied to all of the plurality of segments 15. For example, the above-described descriptions may all be applied to the intermediate segment ($15_n$) and the ending segment ($15_e$).

For example, referring to FIG. 8A, FIG. 8B, and the above-described mathematical formulas 1 to 7, the bottom angle ($\alpha_e$) of the ending segment ($15_e$) may also be obtained using the mathematical formula below.

[Mathematical Formula 8]

$$\theta_e = \frac{-b_e + \sqrt{b_e^2 + 2r_o l_e}}{r_0}$$

However, in this case, $b_e$ may refer to the total winding thickness to the ending segment ($15_e$), and $l_e$ may refer to the winding length from the starting portion (sp) to the ending segment ($15_e$).

[Mathematical Formula 9]

$$\alpha_e = \frac{1}{2}(\pi - \varnothing_e) = \frac{1}{2}\left(\pi - \frac{2\pi w_e}{c_e}\right) = \frac{1}{2}\left(\pi - \frac{2\pi w_e}{2\pi r_e}\right) = \frac{1}{2}\left(\pi - \frac{w_e}{r_e}\right) = \frac{1}{2}\left(\pi - \frac{w_e}{r_o + b_e}\right)$$

$$= \frac{1}{2}\left(\pi - \frac{w_e}{r_o + n_e t}\right) = \frac{1}{2}\left(\pi - \frac{w_e}{r_o + \frac{\theta_e}{2\pi}t}\right)$$

However, in this case, $w_e$ may refer to the width of the ending segment ($15_e$), and $\theta_e$ may refer to the winding angle [rad] from the starting portion (sp) to the ending segment ($15_e$). Meanwhile, in some non-limiting embodiments, the segments 15 may be spaced apart from each other, and/or an inequality relationship with a smaller angle may be obtained.

For example, $\alpha_e \leq \frac{1}{2}\left(\pi - \frac{w_e}{r_o + \frac{\theta_e}{2\pi}t}\right)$ may be satisfied.

In this case, if mathematical formula 8 is substituted into mathematical formula 9, the bottom angle ($\alpha_s$) of the ending segment ($15_e$) may be derived as the formula below.

[Mathematical Formula 10]

$$\alpha_e = \frac{1}{2}\left(\pi - \frac{w_e}{r_0 + \frac{(-b_e + \sqrt{b_e^2 + 2r_0 l_e})t}{2\pi r_0}}\right)$$

Meanwhile, if there is no unnotched portion 17 close to the end portion (EP), $r_e$=radius (R) of the electrode assembly 10.

Also, referring to FIG. 9, the segment (15n) disposed in the middle may also be obtained by the mathematical formula below, similar to the mathematical formula described above.

[Mathematical Formula 11]

$$\alpha_n = \frac{1}{2}\left(\pi - \frac{w_n}{r_0 + \frac{\left(-b_n + \sqrt{b_n^2 + 2r_0 l_n}\right)t}{2\pi r_0}}\right)$$

In this case, $w_n$ may be the width of the nth segment ($15_n$), $b_n$n may be the thickness to the nth segment ($15_n$), and $l_n$ may be the winding length from the starting portion (sp) to the nth segment ($15_n$).

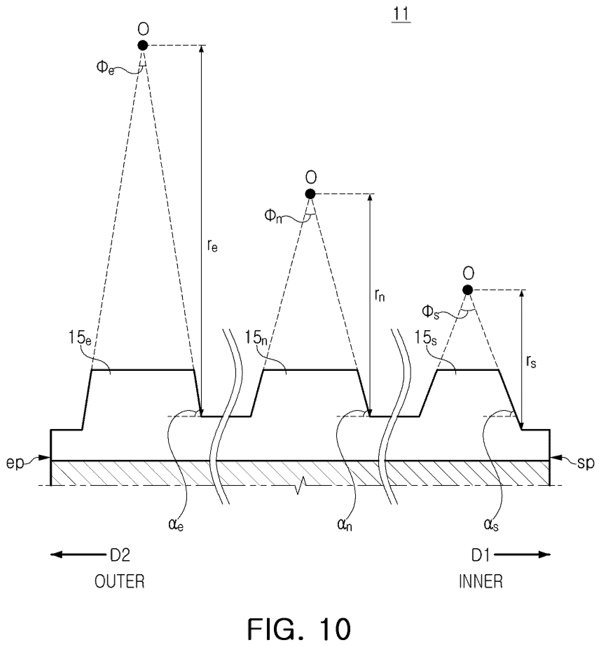

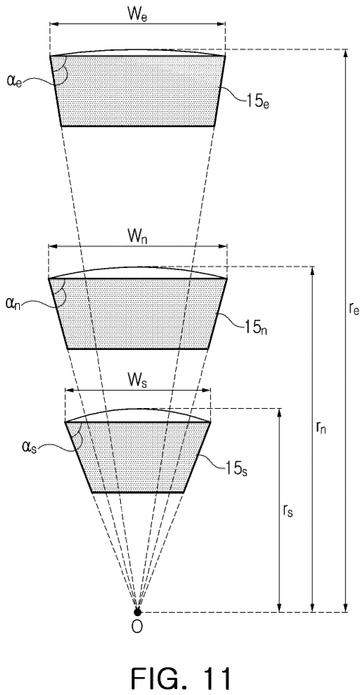

FIG. 10 is a schematic diagram comparing the inner segment, the intermediate segment, and the outer segment, and FIG. 11 is a schematic diagram comparing the inner segment, the intermediate segment, and the outer segment with respect to the winding axis.

Referring to FIGS. 10 and 11, a plurality of segments 15 according to some non-limiting embodiments may be arranged such that the angles and/or widths change from the starting portion (SP) to the end portion (EP).

According to some non-limiting embodiments, the plurality of segments 15 may be arranged such that the bottom angles ($\alpha$) increase from the starting segment (15s) to the ending segment (15e). For example, the bottom angle $\alpha$ may increase uniformly. For example, the bottom angle ($\alpha_n$)) of the nth segment 15 may be obtained by the following formula.

[Mathematical Formula 12]

$$\alpha_n = \alpha_{n-1} + \left(\frac{\alpha_e - \alpha_s}{N-1}\right)$$

In this case, N is the number of total segments 15, n is an arbitrary natural number greater than 1 and less than or equal to N, $\alpha_e$ may be the bottom angle of the Nth disposed ending segment ($15_e$), and $\alpha_s$ may be the bottom angle of the 1st disposed starting segment ($15_s$).

In addition, according to some non-limiting embodiments, the plurality of segments 15 may be arranged such that the central angles (Ø) of the plurality of segments 15 decrease as they go toward the outer side D2 of the winding direction (WD). For example, the central angles (Ø) may decrease uniformly. For example, the central angle (Ø) of the nth segment 15 may be obtained by the following formula.

[Mathematical Formula 13]

$$\emptyset_n = \emptyset_{n-1} - \left(\frac{\emptyset_s - \emptyset_e}{N-1}\right)$$

In the case, N is the total number of segments 15, n is any natural number greater than 1 and less than or equal to N, $\emptyset_e$ may be the central angle of the Nth disposed ending segment ($15_e$), and $\emptyset_s$ may be the central angle of the 1st disposed starting segment ($15_s$).

In addition, according to some non-limiting embodiments, the widths (w) of the segment 15 may be arranged to increase. For example, the widths (w) of the plurality of segments 15 may increase uniformly as they go toward the outer side D2 of the winding direction (WD). For example, the width (w) of the nth segment 15 may be obtained by the following formula.

[Mathematical Formula 14]

$$w_n = w_{n-1} + \left(\frac{w_e - w_s}{N-1}\right)$$

In this case, N is the total number of segments 15, n is any natural number greater than 1 and less than or equal to N, $w_e$ may be the width of the Nth disposed ending segment ($15_e$), and $w_s$ may be the width of the 1st disposed starting segment ($15_s$).

Meanwhile, the width (w) of the segment 15 here may refer to at least one of the upper side close to the winding axis (O) or the bottom side close to the uncoated portions 132 and 142, assuming that the segment 15 is a trapezoid. In the drawing, the width (w) is described based on the bottom side, but the present disclosure is not limited thereto, and the mathematical formula 11 above may also be applied to the upper side of the segment 15.

FIG. 12A is a drawing illustrating that one side of a segment is formed at a right angle, and FIG. 12B is a drawing illustrating that the other side of the segment is formed at a right angle. FIG. 13A is a drawing illustrating that one side of a segment is formed at an acute angle, and FIG. 13B is a drawing illustrating that the other side of the segment is formed at an obtuse angle. FIGS. 12A, 12B, 13A and 13B schematically illustrate some non-limiting embodiments in which the segment 15 is not an isosceles trapezoid. For example, the description is omitted to the extent that it overlaps with the descriptions of FIGS. 1 to 4, 5A, 5B, 5C, 5D, 6, 7A, 7B, 8A, 8B, and 9 to 11.

Referring to FIG. 12A, each of a plurality of segments 15 according to some non-limiting embodiments may be formed in the shape of a right-angled trapezoid in which the bottom angle ($\alpha$) disposed in the inner (D1) direction is at a right angle. Also, referring to FIG. 12B, each of the plurality of segments 15 according to some non-limiting embodiments may be formed in the shape of a right-angled trapezoid in which the bottom angle ($\beta$) disposed in the outer (D2) direction is a right angle.

For example, according to some non-limiting embodiments, each of the plurality of segments 15 may be a right-angled trapezoid in which either the bottom angle ($\alpha$) of the inner (D1) side or the bottom angle ($\beta$) of the outer (D2) side of the winding direction (WD) is formed as a right angle. For example, the bottom angle of each of the plurality of segments 15 includes a first bottom angle ($\alpha$) close to the starting portion (sp) and a second bottom angle ($\beta$) close to the end portion (ep), and each of the plurality of segments 15 may be formed in a trapezoid in which the first bottom angle ($\alpha$) or the second bottom angle ($\beta$) is a right angle.

Referring to FIG. 13A, each of the plurality of segments 15 according to some non-limiting embodiments may be formed in a trapezoidal shape in which the bottom angle ($\alpha$) disposed in the inner (D1) direction is an acute angle and the bottom angle ($\beta$) disposed in the outer (D2) direction is an obtuse angle. In addition, referring to FIG. 13B, each of the plurality of segments 15 according to some non-limiting embodiments may be formed in a trapezoidal shape in which the bottom angle ($\alpha$) disposed in the inner (D1) direction is an obtuse angle and the bottom angle ($\beta$) disposed in the outer (D2) direction is an acute angle.

For example, according to some non-limiting embodiments, each of the plurality of segments 15 may be formed in which either the bottom angle ($\alpha$) of the inner (D1) direction or the bottom angle ($\beta$) of the outer (D2) direction in the winding direction (WD) is a obtuse angle. For example, the bottom angle of each of the plurality of segments 15 includes a first bottom angle ($\alpha$) close to the winding axis (O), a second bottom angle ($\beta$) disposed farther than the first bottom angle, and each of the plurality of segments 15 may be formed as a scalene trapezoid in which the first bottom angle ($\alpha$) or the second bottom angle ($\beta$) is an obtuse angle, and two hypotenuses have different sizes.

Meanwhile, according to some non-limiting embodiments, regardless of the shape of the segment 15, the sum of the bottom angles of the bottom side may be obtained by the following formula.

[Mathematical Formula 15]

$$\alpha + \beta = (\pi - \varnothing) = \left(\pi - \frac{2\pi w}{c}\right) = \left(\pi - \frac{2\pi w}{2\pi r}\right) = \left(\pi - \frac{w}{r}\right) = \left(\pi - \frac{w}{r_o + b}\right) = \left(\pi - \right.$$

$$\left. \frac{w}{r_o + n\,t}\right) = \left(\pi - \frac{w}{r_o + \frac{\theta}{2\pi}t}\right) = \left(\pi - \frac{w}{r_o + \frac{\left(-b + \sqrt{b^2 + 2r_o l}\right)t}{2\pi r_0}}\right)$$

In addition, as in the non-limiting embodiments of FIGS. 12A, 12B, 13A and 13B, at least one of one bottom angle ($\alpha$), the central angle ($\varnothing$), or the width (w) of the segment 15 may be provided to increase uniformly.

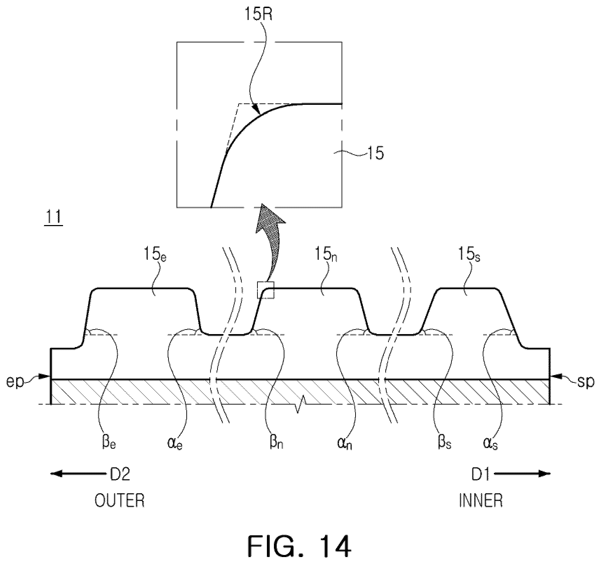

FIG. 14 is a drawing illustrating that the corners of the segment are formed to be rounded.

Referring to FIG. 14, at least one of the plurality of segments 15 according to some non-limiting embodiments may be formed with a rounded portion 15R. For example, at least one of the plurality of segments 15 may be formed with a rounded corner portion of an upper side facing the center (CT).

According to some non-limiting embodiments, at least one of the plurality of segments 15 may be formed with a rounded portion 15R at an upper side corner close to the winding axis (O). The rounded portion 15R may be formed with a predetermined curvature at the corner of the upper side of the segment 15.

The rounded portion 15R may prevent a decrease in the notching speed of the laser at the angled corner portion of the upper side of the segment 15 when forming a plurality of segments 15 through laser notching of the uncoated portions 132 and 142.

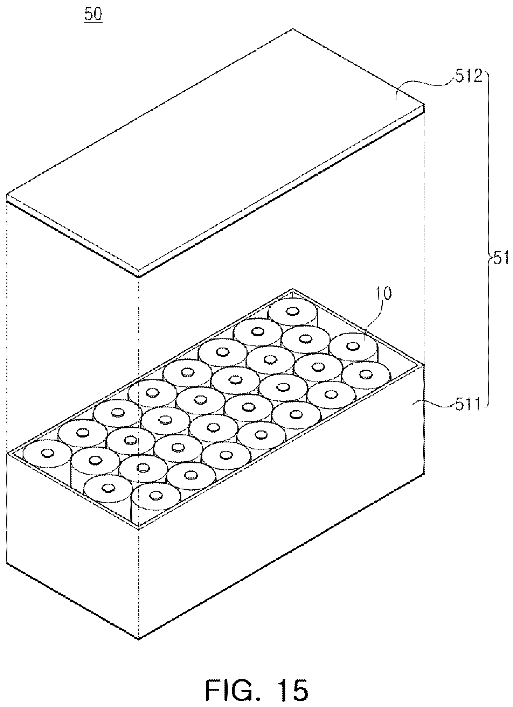

FIG. 15 is an example diagram of a power source 50 according to some non-limiting embodiments.

Descriptions that overlap with the contents described above in FIGS. 1 to 4, 5A, 5B, 5C, 5D, 6, 7A, 7B, 8A, 8B, 9 to 11, 12A, 12B, 13A, 13B, and 14 are omitted.

According to some non-limiting embodiments, the power source 50 may include at least one battery cell 1. The power source 50 according to some non-limiting embodiments may refer to a power supply source that includes at least one battery cell 1 described in FIGS. 1 to 4, 5A, 5B, 5C, 5D, 6, 7A, 7B, 8A, 8B, 9 to 11, 12A, 12B, 13A, 13B, and 14, such as a battery module, a battery pack, or an energy storage device (ESS).

According to some non-limiting embodiments, the power source 50 may include at least one battery cell 1 including an electrode assembly 10 and a housing 51 in which the battery cell 1 is accommodated. In this case, the battery cell 1 may mean including a battery cell 1 described above in FIGS. 1 to 4, 5A, 5B, 5C, 5D, 6, 7A, 7B, 8A, 8B, 9 to 11, 12A, 12B, 13A, 13B, and 14.

For example, according to some non-limiting embodiments, the power source 50 may include a housing 51 including a first cover 511 that accommodates at least one battery cell 1 and a second cover 512 that covers the first cover 511. For example, if it accommodates the battery cell 1 described above in FIGS. 1 to 4, 5A, 5B, 5C, 5D, 6, 7A, 7B, 8A, 8B, 9 to 11, 12A, 12B, 13A, 13B, and 14, it may be said that they all belong to the power source 50 in the present disclosure.

As set forth above, according to some non-limiting embodiments, the flatness between a plurality of segments may be improved.

According to some non-limiting embodiments, the area of overlap between a plurality of segments may be significantly reduced.

According to some non-limiting embodiments, the welding efficiency between a plurality of segments and a current collector may be increased.

Aspect 1) An electrode assembly comprising: a first electrode plate wound about a winding axis and comprising a first uncoated portion without a first electrode active material coated thereon; a second electrode plate wound about the winding axis and comprising a second uncoated portion without a second electrode active material coated thereon; a separator disposed between the first electrode plate and the second electrode plate; and a plurality of segments formed on at least one of the first uncoated portion or the second uncoated portion, wherein the plurality of segments are arranged such that at least one bottom angle is changed in a winding direction.

Aspect 2) The electrode assembly of aspect 1, wherein each of the plurality of segments comprises a trapezoidal shape, and wherein the plurality of segments overlap each other at an overlap ratio of 5% or less in the winding direction.

Aspect 3) The electrode assembly of aspect 1 or 2, wherein at least one of the first uncoated portion or the second uncoated portion further comprises an unnotched portion in which the plurality of segments are not formed, wherein the unnotched portion is disposed adjacently to at least one of a starting portion comprising an end closer to the winding axis based on the winding direction or an end portion comprising an end farthest from the winding axis.

Aspect 4) The electrode assembly of any one of aspects 1 to 3, wherein the plurality of segments are arranged such that a size of the at least one bottom angle thereof increases toward an end portion comprising an end farthest from the winding axis based on the winding direction, and wherein the size of the at least one bottom angle of the plurality of segments increases uniformly toward the end portion based on the winding direction.

Aspect 5) The electrode assembly of aspect 4, wherein among the plurality of segments, a bottom angle ($\alpha_n$) of a segment disposed nth from a starting portion comprising an end close to the winding axis satisfies the following formula:

$$\alpha_n = \alpha_{n-1} + \left(\frac{\alpha_e - \alpha_s}{N-1}\right)$$, where N is a total number of the plurality of segments, n is a natural number greater than 1 and less than or equal to $N$, $\alpha_e$ is a bottom angle ($\alpha_N$) of an Nth-disposed ending segment, and $\alpha_s$ is a bottom angle ($\alpha_1$) of a 1st-disposed starting segment.

Aspect 6) The electrode assembly of aspect 5, wherein the plurality of segments are formed as an isosceles trapezoid, and the bottom angle ($\alpha_s$) of the starting segment satisfies the following formula: $\alpha_s \leq \frac{1}{2}\left(\pi - \frac{w_s}{r_o + \frac{\theta_s}{2\pi}t}\right)$,

where $w_s$ is a width of the starting segment, $r_o$ is a shortest radius from the winding axis to the first electrode plate or the second electrode plate, $\theta_s$ is a winding angle to the starting segment, and t is a thickness when winding once.

Aspect 7) The electrode assembly of aspect 6, wherein the winding angle ($\theta_s$) of the starting segment satisfies the following formula: $\theta_s = \dfrac{-b_s + \sqrt{b_s{}^2 + 2r_0 l_s}}{r_0}$ , where $l_s$ is a winding length from the starting portion to the starting segment, and $b_s$ is a winding thickness to the starting segment.

Aspect 8) The electrode assembly of any one of aspects 5 to 7, wherein the plurality of segments are formed as an isosceles trapezoid, and the bottom angle ($\alpha_e$) of the ending segment satisfies the following formula: $\alpha_e \leq \dfrac{1}{2}\left(\pi - \dfrac{w_e}{r_0 + \frac{\theta_e}{2\pi}t}\right)$ , where $w_e$ is a width of the ending segment, $r_o$ is a shortest diameter from the winding axis to the first electrode plate or the second electrode plate, $\theta_e$ is a winding angle to the ending segment, and t is a thickness when winding once.

Aspect 9) The electrode assembly of aspect 8, wherein the winding angle ($\theta_e$) of the ending segment satisfies the following formula: $\theta_e = \dfrac{-b_e + \sqrt{b_e{}^2 + 2r_0 l_e}}{r_0}$ , where $l_e$ is a winding length from a starting portion to the ending segment, and $b_e$ is a winding thickness up to the ending segment.

Aspect 10) The electrode assembly of any one of aspect 1 to 9, wherein widths of the plurality of segments increase at a constant rate going outward in the winding direction.

Aspect 11) The electrode assembly of aspect 10, wherein a width ($w_n$) of a segment nth disposed from the winding axis among the plurality of segments satisfies the following formula: $w_n = w_{n-1} + \left(\dfrac{w_e - w_s}{N-1}\right)$ , where N is a number of the plurality of segments, n is a natural number greater than 1 and less than or equal to N, $w_e$ is a width of an Nth-disposed ending segment, and $w_s$ is a width of a 1st-disposed starting segment.

Aspect 12) The electrode assembly of any one of aspects 1 to 11, wherein a central angle of the plurality of segments decreases at a constant rate going outward in the winding direction.

Aspect 13) The electrode assembly of aspect 12, wherein among the plurality of segments, a central angle ($\emptyset_n$) of an nth-disposed segment from the winding axis satisfies the following formula: $\emptyset_n = \emptyset_{n-1} - \left(\dfrac{\emptyset_s - \emptyset_e}{N-1}\right)$ , where N is a number of the plurality of segments, n is a natural number greater than 1 and less than or equal to N, $\emptyset_e$ is a central angle of an Nth-disposed ending segment, and $\emptyset_s$ is a central angle of a 1st-disposed starting segment.

Aspect 14) The electrode assembly of any one of aspects 1 to 13, wherein the bottom angle of each of the plurality of segments comprises a first bottom angle disposed close to the winding axis and a second bottom angle disposed farther from the winding axis than the first bottom angle, wherein one of the first bottom angle or the second bottom angle is formed as a right angle, wherein each of the plurality of segments is a right-angled trapezoid.

Aspect 15) The electrode assembly of any one of aspects 1 to 14, wherein the at last one bottom angle of the plurality of segments comprises a first bottom angle disposed close to the winding axis and a second bottom angle disposed farther from the winding axis than the first bottom angle, and the plurality of segments comprises a scalene trapezoid in which one of the first bottom angle or the second bottom angle is formed as an obtuse angle and sizes of both hypotenuses are different.

Aspect 16) The electrode assembly of any one of aspects 1 to 15, wherein the plurality of segments have a ratio of areas overlapping each other in the winding direction greater than 0, and a size of an overlapping width between adjacent segments is constant going outward from the winding axis.

Aspect 17) The electrode assembly of any one of aspects 1 to 16, wherein the plurality of segments are provided such that at least one hypotenuse is in contact in the winding direction, and wherein at least one of the plurality of segments has a rounded portion formed at at least one corner.

Aspect 18) The electrode assembly of any one of aspects 1 to 17, wherein the plurality of segments have a ratio of area of overlaps of less than 0 provided by being adjacent to each other in the winding direction, and a size of a separation distance between the plurality of segments adjacent to each other is constant going outward from the winding axis.

Aspect 19) A secondary battery comprising: an electrode assembly comprising a first electrode plate and a second electrode plate, and wound about a winding axis; a can accommodating the electrode assembly and having at least one opening formed therein; a cap assembly coupled to the can and closing the opening; and a collector plate electrically connected to the electrode assembly, wherein at least one of the first electrode plate or the second electrode plate comprises a plurality of segments bent toward the winding axis and forming one surface of the electrode assembly, and the plurality of segments are provided such that at least one bottom angle changes moving away from the winding axis.

Aspect 20) A power source comprising: at least one battery cell comprising an electrode assembly; and a housing with the battery cell accommodated therein, wherein the electrode assembly comprises, a first electrode plate wound about a winding axis and comprising a first uncoated portion without a first electrode active material coated thereon; a second electrode plate wound about the winding axis and comprising a second uncoated portion without a second electrode active material coated thereon; and a plurality of segments formed on at least one of the first uncoated portion or the second uncoated portion, wherein the plurality of segments are arranged such that at least one bottom angle is changed in a winding direction.

**Claims**

1.  An electrode assembly comprising:

    a first electrode plate wound about a winding axis and comprising a first uncoated portion without a first electrode active material coated thereon;
    a second electrode plate wound about the winding axis and comprising a second uncoated portion without a second electrode active material coated thereon;
    a separator disposed between the first electrode plate and the second electrode plate; and
    a plurality of segments formed on at least one of the first uncoated portion or the second uncoated portion, wherein the plurality of segments are arranged such that at least one bottom angle is changed in a winding direction.

2.  The electrode assembly of claim 1, wherein each of the plurality of segments comprises a trapezoidal shape, and wherein the plurality of segments overlap each other at an overlap ratio of 5% or less in the winding direction.

3.  The electrode assembly of claim 1 or 2, wherein at least one of the first uncoated portion or the second uncoated portion further comprises an unnotched portion in which the plurality of segments are not formed,
    wherein the unnotched portion is disposed adjacently to at least one of a starting portion comprising an end closer to the winding axis based on the winding direction or an end portion comprising an end farthest from the winding axis.

4.  The electrode assembly of any one of claims 1 to 3, wherein the plurality of segments are arranged such that a size of the at least one bottom angle thereof increases toward an end portion comprising an end farthest from the winding axis based on the winding direction, and
    wherein the size of the at least one bottom angle of the plurality of segments increases uniformly toward the end portion based on the winding direction.

5.  The electrode assembly of claim 4, wherein among the plurality of segments, a bottom angle ($\alpha_n$) of a segment disposed nth from a starting portion comprising an end close to the winding axis satisfies the following formula:

    $\alpha_n = \alpha_{n-1} + \left(\frac{\alpha_e - \alpha_s}{N-1}\right)$, where N is a total number of the plurality of segments, n is a natural number greater than 1 and less than or equal to $N$, $\alpha_e$ is a bottom angle ($\alpha_N$) of an Nth-disposed ending segment, and $\alpha_s$ is a bottom angle ($\alpha_1$) of a 1st-disposed starting segment,

    preferably wherein the plurality of segments are formed as an isosceles trapezoid, and

    the bottom angle ($\alpha_s$) of the starting segment satisfies the following formula: $\alpha_s \leq \frac{1}{2}\left(\pi - \frac{w_s}{r_o + \frac{\theta_s}{2\pi}t}\right)$, where $w_s$ is a width of the starting segment, $r_o$ is a shortest radius from the winding axis to the first electrode plate or the second electrode plate, $\theta_s$ is a winding angle to the starting segment, and $t$ is a thickness when winding once,
    optionally wherein the winding angle ($\theta_s$) of the starting segment satisfies the following formula:

    $\theta_s = \frac{-b_s + \sqrt{b_s^2 + 2r_0 l_s}}{r_0}$ , where $l_s$ is a winding length from the starting portion to the starting segment, and $b_s$ is a winding thickness to the starting segment.

6.  The electrode assembly of claim 5, wherein the plurality of segments are formed as an isosceles trapezoid, and

the bottom angle ($\alpha_e$) of the ending segment satisfies the following formula: $\alpha_e \leq \frac{1}{2}\left(\pi - \frac{w_e}{r_o + \frac{\theta_e}{2\pi}t}\right)$, where $w_e$ is a width of the ending segment, $r_o$ is a shortest diameter from the winding axis to the first electrode plate or the second electrode plate, $\theta_e$ is a winding angle to the ending segment, and $t$ is a thickness when winding once, preferably wherein the winding angle ($\theta_e$) of the ending segment satisfies the following formula: $\theta_e = \frac{-b_e + \sqrt{b_e^2 + 2r_0 l_e}}{r_0}$, where $l_e$ is a winding length from a starting portion to the ending segment, and $b_e$ is a winding thickness up to the ending segment.

7. The electrode assembly of any one of claim 1 to 6, wherein widths of the plurality of segments increase at a constant rate going outward in the winding direction,
preferably wherein a width ($w_n$) of a segment nth disposed from the winding axis among the plurality of segments satisfies the following formula: $w_n = w_{n-1} + \left(\frac{w_e - w_s}{N-1}\right)$, where N is a number of the plurality of segments, n is a natural number greater than 1 and less than or equal to N, $w_e$ is a width of an Nth-disposed ending segment, and $w_s$ is a width of a 1st-disposed starting segment.

8. The electrode assembly of any one of claims 1 to 7, wherein a central angle of the plurality of segments decreases at a constant rate going outward in the winding direction,
preferably wherein among the plurality of segments, a central angle ($\varnothing_n$) of an nth-disposed segment from the winding axis satisfies the following formula: $\varnothing_n = \varnothing_{n-1} - \left(\frac{\varnothing_s - \varnothing_e}{N-1}\right)$, where N is a number of the plurality of segments, n is a natural number greater than 1 and less than or equal to N, $\varnothing_e$ is a central angle of an Nth-disposed ending segment, and $\varnothing_s$ is a central angle of a 1st-disposed starting segment.

9. The electrode assembly of any one of claims 1 to 8, wherein the bottom angle of each of the plurality of segments comprises a first bottom angle disposed close to the winding axis and a second bottom angle disposed farther from the winding axis than the first bottom angle,
wherein one of the first bottom angle or the second bottom angle is formed as a right angle, wherein each of the plurality of segments is a right-angled trapezoid.

10. The electrode assembly of any one of claims 1 to 9, wherein the at last one bottom angle of the plurality of segments comprises a first bottom angle disposed close to the winding axis and a second bottom angle disposed farther from the winding axis than the first bottom angle, and
the plurality of segments comprises a scalene trapezoid in which one of the first bottom angle or the second bottom angle is formed as an obtuse angle and sizes of both hypotenuses are different.

11. The electrode assembly of any one of claims 1 to 10, wherein the plurality of segments have a ratio of areas overlapping each other in the winding direction greater than 0, and
a size of an overlapping width between adjacent segments is constant going outward from the winding axis.

12. The electrode assembly of any one of claims 1 to 11, wherein the plurality of segments are provided such that at least one hypotenuse is in contact in the winding direction, and
wherein at least one of the plurality of segments has a rounded portion formed at at least one corner.

13. The electrode assembly of any one of claims 1 to 12, wherein the plurality of segments have a ratio of area of overlaps of less than 0 provided by being adjacent to each other in the winding direction, and
a size of a separation distance between the plurality of segments adjacent to each other is constant going outward from the winding axis.

14. A secondary battery comprising:

an electrode assembly comprising a first electrode plate and a second electrode plate, and wound about a winding axis;
a can accommodating the electrode assembly and having at least one opening formed therein;

a cap assembly coupled to the can and closing the opening; and
a collector plate electrically connected to the electrode assembly,
wherein at least one of the first electrode plate or the second electrode plate comprises a plurality of segments bent toward the winding axis and forming one surface of the electrode assembly, and
the plurality of segments are provided such that at least one bottom angle changes moving away from the winding axis.

15. A power source comprising:

at least one battery cell comprising an electrode assembly; and
a housing with the battery cell accommodated therein,

wherein the electrode assembly is as defined in any one of claims 1 to 13.

FIG. 1

FIG. 2

FIG. 3

FIG. 4

FIG. 5A

s>0

A

FIG. 5B

s=0

A

FIG. 5C

24

$15_{n+1}$

$15_n$

$15_{n-1}$

$du$

$s<0$

A

FIG. 5D

FIG. 6

FIG. 7A

FIG. 7B

FIG. 8A

FIG. 8B

FIG. 9

FIG. 10

FIG. 11

FIG. 12A

FIG. 12B

FIG. 13A

FIG. 13B

FIG. 14

50

512

51

10

511

FIG. 15

Europäisches
Patentamt

European
Patent Office

Office européen
des brevets

**EUROPEAN SEARCH REPORT**

**Application Number**

EP 25 20 0819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/133740 A1 (LIM HAE-JIN [KR] ET AL) 4 May 2023 (2023-05-04) <br> * paragraphs [0010], [0013], [0167]; figures 2,4,7a,7b * <br> * figure 4 * <br> * paragraph [0145]; figure 5 * <br> * paragraphs [0190], [0191]; figure 6 * <br> * paragraphs [0321] - [0344]; figure 10 * <br> * paragraphs [0441] - [0443]; figure 26 * <br> * paragraphs [0019], [0140], [0149], [0183] * <br> ----- | 1-8, 11-15 | INV. <br> H01M10/04 <br> H01M10/0587 <br> H01M50/533 <br> H01M50/538 |
| X | US 2024/266583 A1 (PARK JONG-SIK [KR] ET AL) 8 August 2024 (2024-08-08) <br> * paragraphs [0010], [0011], [0369]; figures 2, 7a, 7b, 11 * <br> * paragraphs [0670] - [0692]; figure 17 * <br> * paragraph [0288]; figures 3, 13, 15 * <br> * paragraph [0461]; figure 9 * <br> * paragraphs [0297] - [0299]; figure 11 * <br> * paragraph [0333] * <br> * claim 38 * <br> ----- | 1,3-10, 14,15 | |
| X | US 2024/088425 A1 (LEE JAE-EUN [KR] ET AL) 14 March 2024 (2024-03-14) <br> * paragraphs [0010], [0011], [0201]; figures 2, 4a, 13-16 * <br> * paragraphs [0163], [0258]; figures 4b, 6b, 7b, 8, 9 * <br> * figures 7a, 13, 15 * <br> * paragraph [0259]; figure 9 * <br> * paragraphs [0391] - [0413]; figure 17 * <br> * paragraphs [0846] - [0848]; figure 30 * <br> ----- <br> -/-- | 1,3-9, 12,14,15 | **TECHNICAL FIELDS SEARCHED (IPC)** <br> H01M |

The present search report has been drawn up for all claims

| Place of search | Date of completion of the search | Examiner |
|---|---|---|
| Munich | 27 January 2026 | Moorhouse, David |

EPO FORM 1503 03.82 (P04C01)

Europäisches
Patentamt

European
Patent Office

Office européen
des brevets

**EUROPEAN SEARCH REPORT**

Application Number

EP 25 20 0819

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/204260 A1 (LIM HAE-JIN [KR] ET AL) 20 June 2024 (2024-06-20)<br>* paragraphs [0010], [0011], [0147]; figures 2,4,6,7 *<br>* paragraphs [0241] - [0268]; figure 9 *<br>* paragraphs [0520] - [0522]; figure 25 *<br>* figure 4 *<br>* paragraph [0017] *<br>* claim 72 *<br>----- | 1,3-7, 11,14,15 | |
| X | US 2023/118382 A1 (LEE MYUNG-AN [KR] ET AL) 20 April 2023 (2023-04-20)<br>* paragraphs [0009], [0010], [0207]; figures 2, 7a, 11-16 *<br>* paragraphs [0425] - [0427]; figure 16 *<br>* paragraphs [0338] - [0368]; figure 17 *<br>* figures 3, 7a, 13, 15 *<br>* paragraphs [0181], [0205] *<br>----- | 1,3-7, 13-15 | |
| | | | TECHNICAL FIELDS SEARCHED (IPC) |

The present search report has been drawn up for all claims

| Place of search | Date of completion of the search | Examiner |
|---|---|---|
| Munich | 27 January 2026 | Moorhouse, David |

EPO FORM 1503 03.82 (P04C01)

## ANNEX TO THE EUROPEAN SEARCH REPORT
## ON EUROPEAN PATENT APPLICATION NO.

EP 25 20 0819

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | | | Publication date | Patent family member(s) | | | Publication date |
|---|---|---|---|---|---|---|---|
| US 2023133740 | A1 | | 04-05-2023 | US | 2022271344 | A1 | 25-08-2022 |
| | | | | US | 2022271345 | A1 | 25-08-2022 |
| | | | | US | 2022271402 | A1 | 25-08-2022 |
| | | | | US | 2022271403 | A1 | 25-08-2022 |
| | | | | US | 2022271405 | A1 | 25-08-2022 |
| | | | | US | 2022278431 | A1 | 01-09-2022 |
| | | | | US | 2023121876 | A1 | 20-04-2023 |
| | | | | US | 2023130340 | A1 | 27-04-2023 |
| | | | | US | 2023133740 | A1 | 04-05-2023 |
| | | | | US | 2023246243 | A1 | 03-08-2023 |
| | | | | US | 2023246245 | A1 | 03-08-2023 |
| | | | | US | 2023291015 | A1 | 14-09-2023 |
| | | | | US | 2024396094 | A1 | 28-11-2024 |
| | | | | US | 2025364606 | A1 | 27-11-2025 |
| US 2024266583 | A1 | | 08-08-2024 | CA | 3234804 | A1 | 25-05-2023 |
| | | | | EP | 4418379 | A1 | 21-08-2024 |
| | | | | JP | 7709610 | B2 | 16-07-2025 |
| | | | | JP | 2024543433 | A | 21-11-2024 |
| | | | | KR | 20230073959 | A | 26-05-2023 |
| | | | | US | 2024266583 | A1 | 08-08-2024 |
| | | | | WO | 2023090573 | A1 | 25-05-2023 |
| US 2024088425 | A1 | | 14-03-2024 | CA | 3219281 | A1 | 25-05-2023 |
| | | | | EP | 4325651 | A1 | 21-02-2024 |
| | | | | JP | 7729981 | B2 | 26-08-2025 |
| | | | | JP | 2024532938 | A | 10-09-2024 |
| | | | | JP | 2025170303 | A | 18-11-2025 |
| | | | | KR | 20230073960 | A | 26-05-2023 |
| | | | | KR | 20240070495 | A | 21-05-2024 |
| | | | | US | 2024088425 | A1 | 14-03-2024 |
| | | | | US | 2024322215 | A1 | 26-09-2024 |
| | | | | US | 2025226432 | A1 | 10-07-2025 |
| | | | | WO | 2023090577 | A1 | 25-05-2023 |
| US 2024204260 | A1 | | 20-06-2024 | CA | 3235893 | A1 | 27-04-2023 |
| | | | | DE | 202022003076 | U1 | 10-10-2024 |
| | | | | EP | 4290630 | A1 | 13-12-2023 |
| | | | | JP | 7680549 | B2 | 20-05-2025 |
| | | | | JP | 2024506306 | A | 13-02-2024 |
| | | | | KR | 20230057938 | A | 02-05-2023 |
| | | | | KR | 20250160865 | A | 14-11-2025 |
| | | | | US | 2024204260 | A1 | 20-06-2024 |
| | | | | WO | 2023068494 | A1 | 27-04-2023 |
| US 2023118382 | A1 | | 20-04-2023 | CA | 3233788 | A1 | 20-04-2023 |

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 20 0819

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2026

| Patent document cited in search report | Publication date | Patent family member(s) | Publication date |
|---|---|---|---|
| | | CN 115986329 A | 18-04-2023 |
| | | CN 218867340 U | 14-04-2023 |
| | | EP 4386969 A1 | 19-06-2024 |
| | | JP 7744502 B2 | 25-09-2025 |
| | | JP 2024528137 A | 26-07-2024 |
| | | KR 20230054604 A | 25-04-2023 |
| | | US 2023118382 A1 | 20-04-2023 |
| | | WO 2023063808 A1 | 20-04-2023 |

EPO FORM P0459

For more details about this annex : see Official Journal of the European Patent Office, No. 12/82

page 2 of 2